# EUROPEAN PATENT APPLICATION

(11) **EP 4 477 716 A1**
(43) Date of publication of application: **18.12.2024**
(21) Application number: 23179813.3
(22) Date of filing: 16.06.2023
(51) Int. Cl.: C09D 5/08, C09D 4/00, C09D 179/00

(54) **CORROSION PROTECTION COMPOSITIONS BASED ON POLY-AZA MICHAEL ADDITION CHEMISTRY**

(71) Applicant: Sherwin-Williams Coatings Deutschland GmbH, 42389 Wuppertal (DE)
(72) Inventor: SCHULZE, Gerd, 42389 Wuppertal (DE); ZIPPERLEN, Sabine, 42389 Wuppertal (DE); VIERTEL, Johannes, 42389 Wuppertal (DE); GRÖTZINGER, Jochen, 42389 Wuppertal (DE)
(74) Representative: Vossius & Partner Patentanwälte Rechtsanwälte mbB

(57) **Abstract**

A corrosion protection composition comprising a component A and a component **B,**
wherein the component A comprises at least one acrylate compound **AcC** having one or more acryloyl groups (CH₂=CHCO-) and/or methacryloyl groups (CH₂=C(CH₃)CO-) in a molecule; and
wherein the component B comprises an amine compound **AmC** comprising at least amine group selected from primary amine groups, secondary amine groups and/or blocked amine groups, whereby the amine compound **AmC** preferably is a compound of the formula (Ia);

X-(CH₂NH₂)ₙ (Ia)

wherein X represents an n-valent organic group having 1 to 80, preferably 1 to 16, carbon atoms and n represents a number between 1 and 10, preferably between 1 and 3;
wherein the wherein the corrosion protection composition further comprises at least one anti-corrosion pigment **CP,** the at least one anti-corrosion pigment **CP** being:
- at least one platelet-shaped anti-corrosion pigment **PSP,** in particular selected from the list consisting of iron mica, mica, zinc, aluminum and phyllosilicates, in particular talc and kaolinite, in an amount of 25 - 60 wt.-%, based on the total weight of the corrosion protection composition, and / or
- at least one active anti-corrosive pigment **AP,** in particular selected from the list consisting of zinc dust, zinc oxide, zinc phosphate, calcium zinc phosphomolybdate, aluminum triphosphate, zinc iron phosphate, strontium zinc phosphosilicate, calcium phosphosilicate, and zinc aluminum phosphate, preferably zinc dust, zinc oxide and zinc phosphate, in particular zinc oxide, in an amount of 2 - 20 wt.-%, based on the total weight of the corrosion protection composition;

wherein the sum of the acrylate compound **AcC** and the amine compound **AmC (AcC** + **AmC)** is from 10 - 60 wt.-%, based on the total weight of the corrosion protection composition; and
wherein the molar ratio of the acryloyl groups (CH₂=CHCO-) and methacryloyl groups (CH₂=C(CH₃)CO-) of the acrylate compound **AcC,** and optionally present epoxy groups of an optional epoxy resin **EP** present in the corrosion protection composition, to the amine groups of the amine compound **AmC** is from 0.75 - 1.25.

## Description

### Technical field

The invention pertains to the field of corrosion protection composition. Additionally, the invention is related to the use of corrosion protection composition for protecting a substrate against corrosion, a method for applying a corrosion protection coating and a coated component obtainable from the method.

### Prior art

Corrosion protection coatings usually are applied on metal parts for preventing corrosion. Such coatings may for example be made from anti-corrosive substances, such as zinc or iron, or they may be based on curable polymeric coatings comprising ant-corrosion pigments.

There are various curable polymeric corrosion protection coatings on the market, which are in particular based on the following technologies: (i) Two-pack epoxy/amine based coatings, (ii) single-pack, moisture triggered polyurethane coatings, (iii) two-pack polyurethane- or polyaspartic-based coatings curable with isocyanates, (iv) single-pack alkyd-based coatings, as well as (v) single- and two-pack polysiloxanes.

These coating usually are applied as a base layer, primer or topcoat through various techniques.

WO 2020/094873 A1 (Sika Technology AG) describes for example an alkyd resin-containing anti-corrosion composition with pigments in the form of platelet-shaped anti-corrosion pigments and/or active anti-corrosion pigments, siccatives and microspheres and/or benzene hydrocarbon resins.

Existing corrosion protection compositions based on epoxy formulations usually show excellent mechanical properties. However, they are limited with regard to curing speed, UV resistance and/or practical level of loading with fillers.

Polyurethane, or polyaspartic-basd coatings are mainly used as (decorative) topcoats, because of their high light fastness and weathering resistance. Their disadvantage are the high raw material prices and in most cases, the use of hazardous isocyanate hardener. For highest light fastness, polysiloxane resins are used, which are even more expensive than polyurethane and polyaspartic resins and also, in some cases, utilize isocyanate hardeners.

(Single pack) alkyd resin coatings are relatively low in raw material cost, easy to apply, but with regard to chemical resistance and corrosion protection on a lower performance level when compared with the above-mentioned technologies.

Thus, there is still a need to provide improved corrosion protection com positions.

### Summary of the invention

The present description provides improved solutions for corrosion protection coatings. Especially, the coatings can be formulated to be mechanically robust, fast curing, UV resistant, and/or devoid of problematic substances to the extent possible. Additionally, the corrosion protection coatings are suitable for a wide variety of applications and are preferably derived from readily available and inexpensive raw materials.

The composition described herein is based on a combination of at least one acrylate compound **AcC,** an amine compound **AmC** and at least one anti-corrosion pigment **CP.** Additional components may be present to adapt the coating to specific requirements and applications.

Surprisingly, it was found that the inventive combination of the different components allows for producing corrosion protection compositions having a curing speed and UV resistance that is favorable when compared with known epoxy-based compositions.

Without being bound by theory, it is believed that this is inter alia due to the relatively fast Michael addition reaction between the acrylate compound **AcC** and the group(s) of the amine compound **AmC,** resulting in acrylate-amine adducts. Depending on the specific amines used, the curing speed can be set in a wide range, from relatively slow to extremely fast.

Also, with the inventive compositions corrosion protection coatings are available that fulfill demanding corrosion tests on metal substrates, in particular the test "resistance to salt spray" according to DIN EN ISO 9227 NSS or the test "resistance to moisture" according to DIN EN ISO 6270-1, especially in the cross-cut test.

Furthermore, the mechanical stability and price of the required raw material required is comparable to known epoxy-based compositions. Also, since the inventive corrosion protection compositions can be formulated without isocyanates, an advantageous hazard classification is possible.

Additionally, it was found that the inventive compositions are suitable for various applications ranging inter alia from fire protection, corrosion protection to flooring. Thereby usual product application is possible. Thus, there is no need for customers to change established workflows or to acquire special equipment.

Further aspects of the description provided herein are subjects of the following description and the independent claims. Particularly preferred embodiments of the invention are subjects of the dependent claims.

### Embodiments of the invention

A subject of the invention is corrosion protection composition comprising a component **A** and a component **B.**

In some embodiments, the component **A** comprises at least one acrylate compound **AcC** having one or more acryloyl groups (CH₂=CHCO-) and/or methacryloyl groups (CH₂=C(CH₃)CO-) in a molecule.

Suitable acrylate compounds are acrylates or methacrylates with one, two, or
more (meth)acrylate groups, especially the ones with low viscosities at room temperature. In a preferred aspect, suitable acrylic binders are at least one (meth)acrylate with two or more functional groups. Suitable acrylates are based on, but not limited to methyl acrylate, ethyl acrylate, butyl acrylate, n-Amyl acrylate, isobornyl acrylate, isobutyl acrylate, tert-Butyl acrylate, hexyl acrylate, 2-ethylhexyl acrylate, 3,5,5-trimethylhexyl acrylate, 2-methoxyethyl acrylate, 2-phenoxyethyl acrylate, 4-tert-butylcyclohexyl acrylate, octyl acrylate, isodecyl acrylate, decyl acrylate, lauryl acrylate, tridecyl acrylate, octadecyl acrylate, behenyl acrylate, modifications or combinations thereof, further examples are diethylenglycoldi(meth)acrylate, triethylenglycoldi(meth)acrylate, or higher polyethylenglycoldi(meth)acrylates, dipropylenglykoldi(meth)acrylate, tripropylenglycoldi(meth)acrylate, or higher polypropylenglycoldi(methacrylates), butanedioldi(meth)acrylate, hexanedioldi(meth)acrylate, dodecandioldi(meth)acrylate, glycerinedi(meth)acrylate, or trimethylolpropanetri(meth)acrylate, especially suitable is trimethylolpropanetriacrylate , derivative thereof but not limited to, can involve combinations. These acrylates offer low viscosities and favourable curing properties.

Especially, the at least one acrylate compound **AcC** has one or more acryloyl groups (CH₂=CHCO-) in the molecule. In particular, the at least one acrylate compound **AcC** has 2-5, preferably 2-4, acryloyl groups (CH₂=CHCO-) in the molecule.

In particular, a proportion of acryloyl groups (CH₂=CHCO-) to methacryloyl groups (CH₂=C(CH₃)CO-) in component **A** is at least 2, especially at least 3, in particular at least 5. Especially, component **A** does not comprises any methacryloyl groups (CH₂=C(CH₃)CO-).

Especially, the acrylate compound **AcC** is an acrylate monomer, but in some embodiments, may also be an acrylate oligomer or polymer, such as, for example, and without limitation, epoxy acrylate, polyester acrylate, urethane acrylate, acrylic acrylate, a melamine acrylate, or derivatives and combinations thereof.

Preferably, the at least one acrylate compound **AcC** does not contain an acid group, especially selected from the group consisting of a carboxyl group, a phosphoric acid group and/or a sulfonic acid group.

Especially, the at least one acrylate compound **AcC** does not contain a OH group and/or an NH₂ group.

In particular, the at least one acrylate compound **AcC** does not contain an acid group, an OH group and an NH₂ group.

Preferably, the at least one acrylate compound **AcC** is based on an aliphatic backbone that can contain ester and/or ether groups in the backbone.

Especially, the at least one acrylate compound **AcC** is based on a polyol, preferably selected from the list consisting of hexandiol, glycerin, trimethylolpropane, isoborneol, ditrimethylolpropane, pentaerythritol, and dipentaerythritol, or an alkoxylated, especially ethoxylated, polyol, said polyol preferably selected from the list consisting of glycerin, trimethylolpropane, ditrimethylolpropane, pentaerythritol and dipentaerythritol.

Most preferably, the at least one acrylate compound **AcC** is selected from hexanediol diacrylate, trimethylolpropane triacrylate, pentaerythritol triacrylate, isoborneol acrylate and/or pentaerythritol tetraacrylate.

In some embodiments, the corrosion protection composition described herein includes component **B,** wherein the component **B** contains a monomeric, oligomeric or polymeric amine compound **AmC,** comprising at least one amine group selected from primary amine groups, secondary amine groups and blocked amine groups and/or at least one blocked amine group, whereby the amine compound **AmC** preferably is a compound of the formula (Ia), (Ib) and/or (Ic);

X-(CH₂NH₂)ₙ (Ia)

X-(NHCH₂)ₘ (Ib)

X-(CH₂)₃N (Ic)

wherein X represents an n-valent organic group having 1 to 80, preferably 1 to 16, carbon atoms and n represents a number between 1 and 10, preferably between 1 and 3; Preferably, X in the general formula (I) is selected from the group consisting of an n-valent hydrocarbon group having an alicyclic structure having 6 or more carbon atoms, an n-valent hydrocarbon group having an aromatic ring structure, an n-valent hydrocarbon group having an araliphatic structure, an n-valent hydrocarbon group having an aliphatic structure and an n-valent polyether group, wherein the before mentioned n-valent hydrocarbon groups may have at least one secondary amine structure inside thereof.

In particular, the amine compound **AmC** represented by following formula (II), (III), (IV), (V), (VI), and/or (VII):

| | |
|---|---|
| 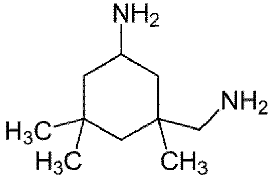 | (II) |
| 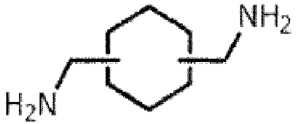 | (III) |
| 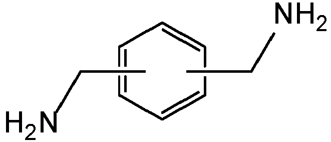 | (IV) |
| 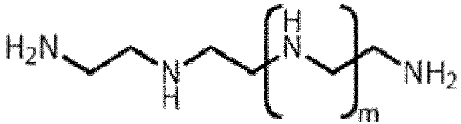 | (V) |
| 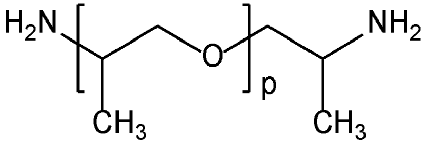 | (VI) |
| 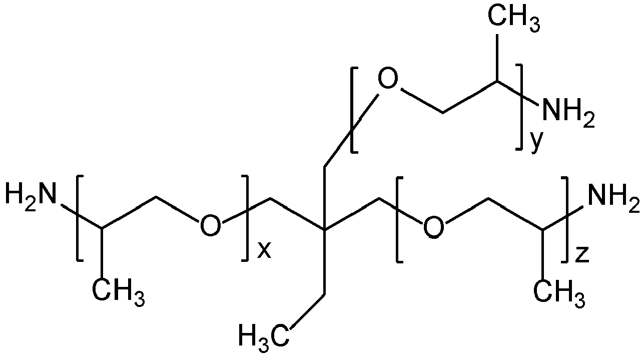 | (VII) |

wherein m represents a number between 0 and 6, preferably between 2 and 3, p represents a number between 1 and 10, preferably between 2 and 3, t represents a number between 0 and 10, preferably 1, and the sum of (x + y + z) represents a number between 3 and 20, preferably between 5 and 6.

Particaulraly preferred, the amine compound **AmC** is represented by formula (II), (III), and/or (IV).

In an embodiment, the sum of the acrylate compound **AcC** and the amine compound **AmC, (AcC** + **AmC)** is from 10 - 60 wt.-%, in particular 30 - 60 wt.-%, based on the total weight of the corrosion protection composition; and
wherein the molar ratio of the acryloyl groups (CH₂=CHCO-) and methacryloyl groups (CH₂=C(CH₃)CO-) of the acrylate compound **AcC** and optionally present epoxy groups of an optional epoxy resin **EP** to the amine groups of the amine compound **AmC** is from 0.75 - 1.25, resembling the stoichiometric ratio, and
Optionally, the corrosion protection composition may comprise >0 - 100 wt.-%, especially 0.1 - 10 wt.-%, based on the total weight of the acrylate compound **AcC,** of at least one epoxy resin **EP,** preferably a liquid epoxy resin.

In particular, the composition does not necessarily comprise an epoxy resin **EP.** However, according to special embodiments, an epoxy resin **EP** may be present.

Suitable as epoxy resin, which may optionally be present in the composition, are commercial technical epoxy resins. These are obtained in a known manner, as for example from the oxidation of the corresponding olefins or from the reaction of epichlorohydrin with the corresponding polyols, polyphenols or amines.

Particularly suitable as epoxy resin are what are called liquid polyepoxy resins, referred to hereinafter as "liquid resin". These have a glass transition temperature below 25°C and an average molecular weight of >700 g/mol.

Likewise possible as epoxy resin are what are called solid resins, which have a glass transition temperature above 25°C and can be comminuted to powders which are pourable at 25°C and can be dissolved in appropriate solvents, or reactive thinners in order to be handled as a liquid.

Suitable epoxy resins are, in particular, aromatic epoxy resins, more particularly the glycidylization products of:
- bisphenol A, bisphenol F or bisphenol A/F, where A stands for acetone and F for formaldehyde, which served as reactants in the preparation of these bisphenols. In the case of bisphenol F, there may also be positional isomers present, derived more particularly from 2,4'- or 2,2'-hydroxyphenylmethane.
- dihydroxybenzene derivatives such as resorcinol, hydroquinone or pyrochatechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert-butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol-TMC), 1,1-bis(4-hydroxyphenyl)-1-phenylethane, 1,4-bis[2-(4-hydroxyphenyl)-2-propyl]benzene (bisphenol P), 1,3-bis[2-(4-hydroxyphenyl)-2-propyl]benzene (bisphenol M), 4,4'-dihydroxybiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl) ether or bis(4-hydroxyphenyl) sulfone;
- condensation products of phenols with formaldehyde which are obtained under acidic conditions, such as phenol novolaks or cresol novolaks, also called bisphenol F novolaks;
- aromatic amines, such as aniline, toluidine, 4-aminophenol, 4,4'-methylenediphenyldiamine, 4,4'-methylenediphenyldi-(N-methyl)amine, 4,4'-[1,4-phenylenebis(1-methylethylidene)]bisaniline (bisaniline P) or 4,4'-[1,3-phenylenebis(1-methylethylidene)]bisaniline (bisaniline M).

Further suitable epoxy resins are aliphatic or cycloaliphatic polyepoxides, more particularly
- glycidyl ethers of saturated or unsaturated, branched or unbranched, cyclic or open-chain di-, tri- or tetra-functional C₂ to C₃₀ alcohols, especially ethylene glycol, propylene glycol, butylene glycol, hexanediol, octanediol, polypropylene glycols, dimethylolcyclohexane, neopentyl glycol, dibromoneopentyl glycol, castor oil, trimethylolpropane, trimethylolethane, pentaerythritol, sorbitol or glycerol, or alkoxylated glycerol or alkoxylated trimethylolpropane;
- a hydrogenated bisphenol A, F or A/F liquid resin, or the glycidylation products of hydrogenated bisphenol A, F or A/F;
- a N-glycidyl derivative of amides or heterocyclic nitrogen bases, such as triglycidyl cyanurate or triglycidyl isocyanurate, or reaction products of epichlorohydrin with hydantoin.
- epoxy resins from the oxidation of olefins, such as, in particular, vinylcyclohexene, dicyclopentadiene, cyclohexadiene, cyclododecadiene, cyclododecatriene isoprene, 1,5-hexadiene, butadiene, polybutadiene or divinylbenzene.

A preferred epoxy resin is a liquid resin based on a bisphenol, more particularly a diglycidyl ether of bisphenol A, bisphenol F or bisphenol A/F, in particular of the kind available commercially, for example, from Dow, Huntsman or Momentive. These liquid resins have a low viscosity for epoxy resins and in the cured state exhibit good coating properties. They may include fractions of solid bisphenol A, bisphenol F, or novolak resins.

In some embodiments, the corrosion protection composition further comprises at least one anti-corrosion pigment **CP,** the at least one anti-corrosion pigment **CP** being:
- at least one platelet-shaped anti-corrosion pigment **PSP,** in particular selected from the list consisting of iron mica, mica, zinc, aluminum and phyllosilicates, in particular talc and kaolinite, in an amount of 25 - 60 wt.-%, based on the total weight of the corrosion protection composition, and / or
- at least one active anti-corrosive pigment **AP,** in particular selected from the list consisting of zinc dust, zinc oxide, zinc phosphate, calcium zinc phosphomolybdate, aluminum triphosphate, zinc iron phosphate, strontium zinc phosphosilicate, calcium phosphosilicate, and zinc aluminum phosphate, preferably zinc dust, zinc oxide and zinc phosphate, in particular zinc oxide, in an amount of 2 - 20 wt.-%, based on the total weight of the corrosion protection composition;

Thus, in some embodiments the corrosion protection composition comprises at least one platelet-shaped anti-corrosion pigment **PSP** and/or at least one active anti-corrosive pigment **AP.**

If the composition comprises a platelet-shaped corrosion protection pigment, this is in particular selected from the list consisting of iron mica, mica, zinc, aluminum and phyllosilicates, in particular talc and kaolinite.

An amount of the of the platelet-shaped anti-corrosion pigment **PSP** in particular is 25 - 60 wt.-%, especially 25 - 50% by weight, for example 30 - 45% by weight, based on the total weight of the corrosion protection composition.

The platelet-shaped anti-corrosion pigments **PSP** preferably have an average diameter D50 with a range from 4 to 35 µm, more preferably from 4.5 to 30 µm, even more preferably from 5 to 25 µm. The D50 value of corrosion protection pigments, which can be obtained by laser diffraction methods, indicate that 50% of the corrosion protection pigments have a diameter which is equal to or smaller than the respectively stated value. The size distribution curve can be determined by laser diffractometry.

The use of platelet-shaped pigments is advantageous for corrosion protection, since platelet-shaped pigments, unlike pigments with spherical or irregular geometries, have a barrier effect after application to the object to be protected against corrosion.

It is preferably platelet-shaped corrosion protection pigments as described under the term "corrosion protection pigments" in Römpp Chemie Lexikon, online version, Georg Thieme Verlag, accessed on November 04, 2018.

If the corrosion protection composition comprises an active anti-corrosion pigment **AP,** this is particularly selected from the list consisting of zinc dust, zinc oxide, zinc phosphate, calcium zinc phosphomolybdate, aluminum triphosphate, zinc iron phosphate, strontium zinc phosphosilicate, calcium phosphosilicate, and zinc aluminum phosphate, preferably zinc dust, zinc oxide and zinc phosphate, in particular zinc oxide.

The active anti-corrosion pigment **AP** is preferably an active corrosion protection pigment as described under the term "corrosion protection pigments" in Römpp Chemie Lexikon, online version, Georg Thieme Verlag, accessed on November 4, 2018.

The proportion of the active corrosion protection pigment **AP** preferably is 2-20% by weight, 4-15% by weight, in particular 5-10% by weight, based on the total weight of the corrosion protection composition.

Especially, the composition particularly preferably contains both at least one platelet-shaped corrosion protection pigment **PSP** and at least one active corrosion protection pigment **AP.**

The corrosion protection composition, after mixing the component **A** with the component **B** for 10 seconds at 23°C has a viscosity at 23°C of 1 - 30 Pa · s, preferably 2 to 20 Pa · s, in particular 3 to 15 Pa · s, measured by means of a plate-plate viscometer at a shear rate of 100 s⁻¹. Such viscosities are highly suitable for different applications. If desired, the viscosity can for example be adjusted with a solvent.

Especially, the corrosion protection composition optionally comprises >0 - 200 wt.-%, especially 0.1 - 15 wt.-%, based on the total weight of the acrylate compound **AcC,** of at least one additive **Sol** selected from solvents and plasticizers, preferably selected from the list consting of xylol, isobutanol, and phosphates, e. g. triisobutyl phosphate.

Especially, the corrosion protection composition contains less than 0.1 wt.-%, preferably less than 0.01 wt.-%, more preferably less than 0.001 wt.-%, based on the total weight of the corrosion protection composition, of at least one radically-polymerizable initiator, especially an azo compound which generates radicals on heating or organic peroxides.

Especially, the corrosion protection composition contains less than 5 wt.-%, preferably less than 1 wt.-%, more preferably less than 0.01 wt.-%, in particular 0 wt.-%, based on the total weight of the corrosion protection composition, of at least one alkyd resin, especially an alkyd resin made from an from polyhydric alcohols, polyvalent carboxylic acids and unsaturated fatty acids. An alkyd resin in particular is a resin as described under the term "alkyd resins" in Römpp Chemie Lexikon, online version, Georg Thieme Verlag, accessed on November 04, 2018.

According to another preferred embodiment, the corrosion protection composition further comprises 0-40 wt.-%, preferably 5 - 30 wt.-%, based on the total weight of the corrosion protection composition, of at least one inorganic filler.

The at least one filler preferably is selected from the group consisting of ground or precipitated calcium carbonate, barite (barite), talc, quartz flour, quartz sand, silicon carbide, iron mica, dolomite, wollastonite, colemanite, kaolin, mica (potassium aluminum silicate), molecular sieve, aluminum oxide, zinc oxide, aluminum hydroxide, magnesium hydroxide, silica, cement, gypsum, fly ash, soot, graphite and hollow spheres, especially talc, quartz powder, kaolin and aluminum hydroxide or modifications or combinations thereof.

In an embodiment, the corrosion protection composition comprises at least one dryer substance. It is preferably a dryer substance (also called desiccant) as described under the term "Trockenstoffe" in Römpp Chemie Lexikon, online version, Georg Thieme Verlag, accessed on November 04, 2018.

The dry substance preferably is selected from the list consisting of salts of cobalt, zirconium, calcium, zinc, iron and manganese and mixtures thereof, in particular salts of zirconium and iron.

The proportion of dryer substance is preferably 0.1 - 3 % by weight, 0.3 - 2 % by weight, in particular 0.5 - 1.6% by weight, based on the total weight of the comp corrosion protection composition.

Those skilled in the art know that there may arise the need to use additional components known as additives to fine tune certain properties of component **A** or component **B** or both of them. These may comprise but are not limited to agents for rheology control, dispersing aids, wetting agents, levelling agents, adhesion promoters, defoamers, deaerators, and/or flame retardants.

Agents for rheology control are used for example but without limitation to improve sagging resistance meaning allowing a higher layer thickness to be applied in one layer, to improve settling in a wet coating composition, meaning that the different components in a wet paint do not separate during storage or transport and so on. They comprise for example but are not limited to modified castor oil derivatives, amid waxes, organic modified layered silicas, fumed silica. They can be used on their own or any combinations thereof.

Dispersing agents are used for example but without limitation to improve quality of the dispersion, to maintain the achieved quality of dispersion, to reduce viscosity of the coating composition comprising binder composition and filler composition and so on. They comprise for example but without limitation, unsaturated acidic polycarboxylic acid polyester, phosphoric acid esters, modified polyurethanes, polyesters with higher molecular weight, highly branched polyesters. They can be used on their own or any combinations thereof.

Wetting agents are used for example but without limitation to improve wetting of surfaces. This includes but is not limited to wetting of solid particles included in an corrosion protection composition or wetting of the surface of any component coated with the ready formulated coatings composition.

They comprise for example but without limitation polyether-modified polydimethylsiloxane. They can be used on their own or in any combinations thereof.

Levelling agents are used for example but without limitation to improve surface quality of a coating composition applied on any component coated with a ready formulated coatings composition. They comprise for example but without limitation polyether- and or polyester modified polydimethylsiloxanes, or polyacrylates. They can be used on their own or in any combination thereof.

Defoamers and deaerators are used for example but without limitation to remove air entrapped in the liquid coatings composition, either component A or component B or both of them. It can also be used to remove air entrapped during the application process of the mixed coatings composition on any component which is coated with the coatings composition. They comprise for example but are not limited to polysiloxanes, polymethylalkylsiloxanes, polyalkylenethers, polyolefines. They can be used on their own or any combination thereof.

Flame retardants are used for example but without limitation to reduce the flammability of the coatings system, or to scavenge reactive mixtures when applied on a component.

They comprise but are not limited to phosphoric acid esters with and without halogen moieties, liquid phosphates, phosphites and phosphonates. Sources of metals or metalloid ions, such as metal oxides, metalloid oxides, metal hydroxides, metalloid hydroxides, metal carbonates, or bicarbonates, metal phosphates, metal chlorides, metal nitrates, metal borates, metal sulphates, metal silicates. They may be present on their own or in any combination, or complexes thereof. The mentioned metals may be selected from, but not limited to Al, B, Ti, Cu, Zn, Mg, Na, Ca, Si, or combinations thereof. Examples used may be, but are not limited to ZnO, ZnPO₄, TiO₂, Al₂O₃, Al(OH)₃, AlPO₄, MgO, MgPO₄.

In a further aspect, the present invention relates to a method for applying the aforementioned composition as a coating to a substrate, especially a substrate as described below. In doing so, the component is protected from corrosion and other environmental degradation.

The fully or partly cured corrosion coating composition may have a further coating, covering or paint applied to it. In this case this further layer may comprise a different material, particularly a polyurethane, polyurea, or polysiloxane coating.

As and when necessary, the substrates may be pretreated before the corrosion coating composition is applied. Such pretreatments include, in particular, physical and/or chemical cleaning techniques, as for example sanding, sandblasting, shotblasting, brushing and/or blowing, and also, furthermore, treatment with cleaners or solvents, or the application of an adhesion promoter, an adhesion promoter solution or a primer.

The surface of the substrate is preferably cleaned, in particular by brushing, blasting, vacuuming or blowing off, and free of oil, grease, cement skin, oxide layers, rust and dusts.

In the event that the corrosion protection coating is used to repair an already coated component where the old coating is damaged and/or no longer suitable, the surface is preferably prepared in this way that the old coating has been at least partially removed from the surface, e.g. by sweep blasting.

If necessary, a primer is applied to the surface of the component, in particular by spraying, pumping, trowelling or using a brush.

One or two component, epoxy, alkyd, acrylic, based primers, either solvent or water based can be used are particularly suitable as primers for steel, especially with up to 100% solid content, with or without zinc oxide, zinc phosphosphate glass, not limited to, two-pack epoxy primers. Some may contain micaceous iron oxide for improved barrier properties. Such primers enable particularly good corrosion protection properties and excellent adhesion of the subsequent corrosion protection coating.

Two component epoxy based primers are particularly suitable as primers for concrete. Such a primer binds existing dust, closes the pores and enables excellent adhesion of the subsequent corrosion protection coating.

For application, the composition can be applied as a coating on a surface, for example a flat surface, an inclined surface and/or on a overhead surface. The composition is preferably applied by spraying, preferably with a spray pressure of more than 50 bar, in particular more than 100 bar. However, it can also be applied by pouring it onto a substrate and then spreading it flat over the desired layer thickness, for example by means of a roller or a brush.

A layer preferably has a layer thickness (dry layer thickness) of 50-160 µm, 60-120 µm, in particular 80-100 µm.

A coating system preferably has a layer thickness (dry layer thickness) of 50-400 µm, 100-320 µm, in particular 200-240 µm.

Another aspect of the invention relates to the use of the corrosion protection composition according to the invention as a coating, in particular as a primer, intermediate coating and/or top coating, in particular for construction and industrial applications.

Thereby, the corrosion protection composition preferably is used for protecting a substrate against corrosion.

Possible applications are found in vehicles, loading areas, tanks, silos, shafts, pipelines, pipelines, machines or steel structures, for example of piers, wind turbines, bridges and cranes, in particular in steel structures, preferably bridges.

Suitable substrates which can be coated with the composition are in particular concrete, metals or alloys such as aluminum, copper, iron, steel, non-ferrous metals, including surface-finished metals or alloys such as galvanized or chromed metals. It is particularly preferably steel.

The substrates mentioned above are preferably elements and/or components of vehicles, loading areas, tanks, silos, shafts, pipelines, pipelines, machines or steel structures, for example piers, wind turbines, bridges and cranes, in particular steel and/or concrete structures, preferably bridges.

If necessary, the substrates can be pretreated before application, in particular by physical and / or chemical cleaning processes.

The coating on the substrate is in particular a component of a corrosion coating comprising:
- if necessary a primer,
- optionally one or more layers of an intermediate coating,
- and optionally a top coat.

The corrosion coating preferably consists of:
- a primer,
- one or more, in particular one, intermediate coating,
- a top coat.

The corrosion protection composition according to the invention can represent the primer and/or the intermediate coating and/or the top coating of the corrosion coating.

Particularly preferably, two, in particular all, of the aforementioned layers consist of the corrosion protection composition according to the invention.

The layers of a composition not according to the invention can in particular be a composition based on a composition selected from the list consisting of acrylate compositions, alkyd resins, epoxy compositions, polyurethane compositions and polyurea compositions.

A primer is applied to wet the surface, improve corrosion protection and a primer serves as an adhesion promoter for layers above.

An article arises from the aforementioned use of the corrosion protection composition or from the application and curing of the composition. Another object of the invention is thus an article comprising the dried composition obtained from the use or method described. It is preferably an article selected from the list consisting of vehicles, loading areas, tanks, silos, shafts, pipelines, pipelines, machines or steel structures, for example piers, wind turbines, bridges and cranes, in particular steel structures, preferably bridges.

A "coating" in this context refers to two-dimensionally applied coverings of all kinds, especially paints, varnishes, seals, priming coats or primers, floor coverings or protective coatings, including in particular those for heavy-duty applications. With particular advantage the coating composition is formulated as a low-emission coating that carries eco-quality labels, according for example to Emicode (EC1 Plus), AgBB, DIBt, Der Blaue Engel, AFSSET, RTS (M1), and US Green Building Council (LEED).

"Coating" is used both for a single "layer" made of the applied composition and for a "coating structure" (also called "coating system" or "system"). The latter consists of one or more "layers". Such a "coating system" can consist, for example, of the following three "layers"; Primer, intermediate coat and top coat.

Substance names beginning with "poly", such as polyamine, polyol or polyepoxide, denote substances which formally contain per molecule two or more of the functional groups that occur in their name.

The term "viscosity" in the present document refers to the dynamic viscosity or shear viscosity, which is defined by the ratio between the shearing stress and the shear rate (rate gradient) and is determined as described in the working examples.

"Molecular weight" is understood in the present document to be the molar mass (in grams per mole) of a molecule. "Average molecular weight" is the numerical average Mₙ of an oligomeric or polymeric mixture of molecules, and is determined customarily by means of gel permeation chromatography (GPC) against polystyrene as standard.

### Examples

Set out below is a working example which is intended to elucidate in more detail the invention described. The invention is of course not confined to this working example described.

### Substances used:

| | |
|---|---|
| TMPTA | Trimethylol propane triacrylat (Sartomer SR 351; Arkema) |
| HDDA | 1,6-hexanediol diacrylate (Sartomer SR 238; Arkema) |
| PETA | Pentaerythritoltriacrylate (Sartomer SR 444; Arkema) |
| IPDA | Isophorone diamine (Vestamin IPD; Evonik) |
| TEPA | Tetraethylene pentamine |
| MXDA | Meta xylylendiamine |
| ZP | Zinc phosphate (Zinc phosphate ZP 10; Krahn Chemie) |
| FL | Filler (= mixture of calcium carbonate, talc and surfacetreated wollastonite filler; Omycarb 10-GU, Mistron CF5AG and Tremin 283-600 AST) |
| PG | Pigment (titan dioxide; Kronos 2310) |

### Production of corrosion protection composition

Corrosion protection coating **A** was produced as follows: The acrylate compounds **AcC,** anti-corrosion pigment, pigment, filler and processing additives were mixed with the mass proportions given in table 1 and provided as a first component and stored under exclusion of moisture. Likewise, the amine compound **AmC** were provided as a second component and stored under exclusion of moisture.

Subsequently the two components were mixed and processed to a homogeneous liquid using a centrifugal mixer. The so obtained mixture was tested immediately as follows:
The **viscosity** of samples with relatively high viscosity (above 150 mPa·s) was measured on a thermostated cone/plate viscometer, Rheotec RC30 (cone diameter 50 mm, cone angle 1°, cone tip/plate distance 0.05 mm, shear rate 10 s⁻¹).

The **viscosity** of low-viscosity samples (below 150 mPa·s) was measured on a thermostated cone/plate rheometer, Anton Paar Physica MCR 300 (cone diameter 25 mm, cone angle 2°, cone tip/plate distance 0.05 mm, shear rate 100 s⁻¹).

The **pot life** was determined as the time until the viscosity doubles.

As a measure of the **curing speed,** the time to reach different drying stages drying stages 1, 6 and 7) under standard climate conditions as described in DIN EN ISO 9117-5:2012 were determined.

**Adhesion** was tested according to DIN EN ISO 4624:2016.

**Corrosion properties** were tested according to DIN EN ISO 12944-1:2019 (C4 testing; 2 × 100 µm TFD); ISO 6270-1:2018 (Condensation; 480 h) and DIN EN ISO 9227:2023 (Salt spray; 720 h).

**Table 1**

| **Component** | | **Example A** |
|---|---|---|
| **AcC** | TMPTA | 25.8 |
| | HDDA | 7.9 |
| | PETA | 5 |
| **AmC** | IPDA/TEPA (3.5:1) | 13.99 |
| Molar ratio | | 1 |
| **AcC:AmC@** | | |
| Anti-corrosion pigment | ZP | 8.0 |
| Pigment | PG | 8.5 |
| Filler | FL | 43.0 |
| Processing additives | Dispersant, thixotropic agent | 2.0 |
| Pot life [h:min] | | 0:30 |
| Drying stage TG 1* [h:min] | | 3:10 h |
| Drying stage TG 6* [h:min] | | 4:00 h |
| Drying stage | | 6:00 h |
| TG 7* [h:min] | | |
| Corrosion testing | | Passed |
| Adhesion | | > 10 MPa |

| | | |
|---|---|---|
| ^{@} = molar ratio of the acryloyl groups (CH₂=CHCO-) and methacryloyl groups (CH₂=C(CH₃)CO-) of the **AcC** to the NH-groups of the amine compound **AmC** | | |

As evident from the data shown in table 1 coating **A** is suitable for use as corrosion protection coating.

## Claims

1. A corrosion protection composition comprising a component **A** and a component **B,**
wherein the component **A** comprises at least one acrylate compound **AcC** having one or more acryloyl groups (CH₂=CHCO-) and/or methacryloyl groups (CH₂=C(CH₃)CO-) in a molecule; and
wherein the component **B** comprises an amine compound **AmC** comprising at least amine group selected from primary amine groups, secondary amine groups and/or blocked amine groups, whereby the amine compound **AmC** preferably is a compound of the formula (Ia);
X-(CH₂NH₂)ₙ (Ia)
wherein X represents an n-valent organic group having 1 to 80, preferably 1 to 16, carbon atoms and n represents a number between 1 and 10, preferably between 1 and 3;
wherein the wherein the corrosion protection composition further comprises at least one anti-corrosion pigment **CP,** the at least one anti-corrosion pigment **CP** being:
- at least one platelet-shaped anti-corrosion pigment **PSP,** in particular selected from the list consisting of iron mica, mica, zinc, aluminum and phyllosilicates, in particular talc and kaolinite, in an amount of 25 - 60 wt.-%, based on the total weight of the corrosion protection composition, and / or
- at least one active anti-corrosive pigment **AP,** in particular selected from the list consisting of zinc dust, zinc oxide, zinc phosphate, calcium zinc phosphomolybdate, aluminum triphosphate, zinc iron phosphate, strontium zinc phosphosilicate, calcium phosphosilicate, and zinc aluminum phosphate, preferably zinc dust, zinc oxide and zinc phosphate, in particular zinc oxide, in an amount of 2 - 20 wt.-%, based on the total weight of the corrosion protection composition;
wherein the sum of the acrylate compound **AcC** and the amine compound **AmC (AcC** + **AmC)** is from 10 - 60 wt.-%, based on the total weight of the corrosion protection composition; and
wherein the molar ratio of the acryloyl groups (CH₂=CHCO-) and methacryloyl groups (CH₂=C(CH₃)CO-) of the acrylate compound **AcC,** and optionally present epoxy groups of an optional epoxy resin **EP** present in the corrosion protection composition, to the amine groups of the amine compound **AmC** is from 0.75 - 1.25.

2. The corrosion protection composition according to claim 1, wherein the X in the general formula (I) is selected from the group consisting of an n-valent hydrocarbon group having an alicyclic structure having 6 or more carbon atoms, an n-valent hydrocarbon group having an aromatic ring structure, an n-valent hydrocarbon group having an araliphatic structure, an n-valent hydrocarbon group having an aliphatic structure and an n-valent polyether group, wherein the before mentioned n-valent hydrocarbon groups may have at least one secondary amine structure inside thereof.

3. The corrosion protection composition according to claim 1 or 2, wherein the amine compound **AmC** is represented by following formula (II), (III), (IV), (V), (VI) or (VII).
| | |
|---|---|
| 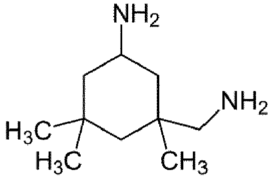 | (II) |
| 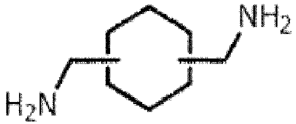 | (III) |
| 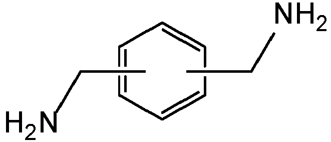 | (IV) |
| 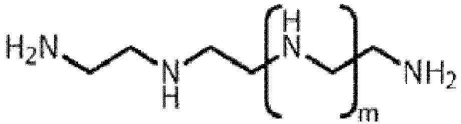 | (V) |
| 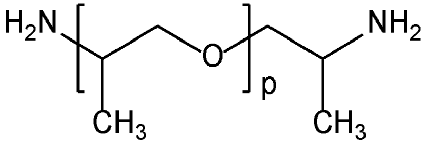 | (VI) |
| 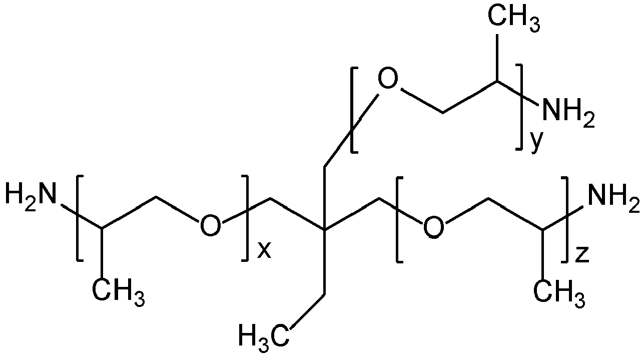 | (VII) |
wherein m represents a number between 0 and 6, preferably between 2 and 3, p represents a number between 1 and 10, preferably between 2 and 3, t represents a number between 0 and 8, preferably 0, and the sum of (x + y + z) represents a number between 3 and 20, preferably between 5 and 6, and
X₁ represents an n-valent organic group having 1 to 10 carbon atoms, preferably X₁ is CH₃.

4. The corrosion protection composition according to claim 3, wherein the amine compound **AmC** is represented by formula (II), (III), or (IV).

5. The corrosion protection composition according to any of the proceeding claims, wherein the at least one acrylate compound **AcC** has one or more acryloyl groups (CH₂=CHCO-) in the molecule.

6. The corrosion protection composition according to claim 5, wherein the at least one acrylate compound **AcC** has 2-5, preferably 2-4, acryloyl groups (CH₂=CHCO-) in the molecule.

7. The corrosion protection composition according to any of the proceeding claims, wherein the at least one acrylate compound **AcC** does not contain an acid group, especially selected from the group consisting of a carboxyl group, a phosphoric acid group and/or a sulfonic acid group.

8. The corrosion protection composition according to any of the proceeding claims, wherein the at least one acrylate compound **AcC** does not contain a OH group and/or an NH₂ group.

9. The corrosion protection composition according to any of the proceeding claims, wherein the at least one acrylate compound **AcC** is based on an aliphatic backbone that can contain ester and/or ether groups in the backbone.

10. The corrosion protection composition according to any of the proceeding claims, wherein the at least one acrylate compound **AcC** is based on a polyol, preferably selected from the list consisting of hexandiol, glycerin, trimethylolpropane, isoborneol, ditrimethylolpropane, pentaerythritol, and dipentaerythritol, or an alkoxylated, especially ethoxylated, polyol, said polyol preferably selected from the list consisting of glycerin, trimethylolpropane, ditrimethylolpropane, pentaerythritol and dipentaerythritol.

11. The corrosion protection composition according to any of the proceeding claims, wherein the at least one acrylate compound **AcC** is selected from hexanediol diacrylate, trimethylolpropane triacrylate, pentaerythritol triacrylate, isoborneol acrylate and/or pentaerythritol tetraacrylate.

12. The corrosion protection composition according to any of the proceeding claims, wherein the corrosion protection composition, after mixing the component **A** with the component **B** for 10 seconds at 23°C has a viscosity at 23°C of 1 - 30 Pa · s, preferably 2 to 20 Pa · s, in particular 3 to 15 Pa · s, measured by means of a plate-plate viscometer at a shear rate of 100 s⁻¹.

13. The corrosion protection composition according to any of the proceeding claims, wherein corrosion protection composition contains less than 0.1 wt.-%, preferably less than 0.01 wt.-%, more preferably less than 0.001 wt.-%, based on the total weight of the corrosion protection composition, of at least one radically-polymerizable initiator, especially an azo compound which generates radicals on heating or organic peroxides.

14. The corrosion protection composition according to any of the proceeding claims, further comprising 5-30 wt.-%, based on the total weight of the corrosion protection composition, of at least one inorganic filler, preferably selected from the group consisting of ground or precipitated calcium carbonate, barite (barite), talc, quartz flour, quartz sand, silicon carbide, iron mica, dolomite, wollastonite, colemanite, kaolin, mica (potassium aluminum silicate), molecular sieve, aluminum oxide, zinc oxide, aluminum hydroxide, magnesium hydroxide, silica, cement, gypsum, fly ash, soot, graphite and hollow spheres, especially talc, quartz powder, kaolin, titanium dioxide and aluminum hydroxide.

15. Use of the corrosion protection composition according to one of claims 1 to 14 as a coating, in particular as a primer, intermediate coating and top coating, in particular for protecting a substrate against corrosion.

16. A method comprising the steps of applying a corrosion protection composition according to one of claims 1 to 14 on a substrate, whereby, preferably, the substrate is selected from metals or alloys such as aluminum, copper, iron, steel, non-ferrous metals, including surface-finished metals or alloys such as galvanized or chromed metals.

17. Coated substrate obtained from the method according to claim 16.
